# EUROPEAN PATENT APPLICATION

(11) **EP 4 560 540 A1**
(43) Date of publication of application: **28.05.2025**
(21) Application number: 24215337.7
(22) Date of filing: 26.11.2024
(51) Int. Cl.: G06N 5/045

(54) **PREDICTING SALIENCY VALUES WITH MACHINE LEARNED MODELS FOR MODEL EXPLANATION**

(30) Priority: 27.11.2023 US 202318519224
(71) Applicant: Red Hat, Inc., Raleigh, NC 27601 (US)
(72) Inventor: GEADA, Robert, Raleigh, 27601 (US); TEOFILI, Tommaso, Raleigh, 27601 (US)
(74) Representative: Murgitroyd & Company

(57) **Abstract**

A computing device accesses a plurality of datasets, each dataset comprising an input of a first plurality of inputs to a computer program, a first output of a plurality of outputs of the computer program, and a value identifying an importance of the input to the first output and produced by an explanation service. The computing device trains a machine-learned model to predict values based on the plurality of dataset. The computing device executes the computer program with a second plurality of inputs to produce a second output. The computing device inserts the second plurality of inputs and the second output into the machine-learned model, and the machine-learned model produces values for the second plurality of inputs based on the second plurality of inputs and the second output.

## Description

### TECHNICAL FIELD

The present disclosure relates generally to software technology, and more particularly, to systems and methods for generating explanations with machine-learned models.

### BACKGROUND

Computer programs may define the computational logic of complex systems with operations that define pieces of information. Computer programs with a large number of operations or with complex operations can become difficult to be easily or quickly understood. Explainable artificial intelligence (XAI) seeks to investigate complex systems and models, however some XAI techniques can be computationally expensive.

### SUMMARY

The examples disclosed herein perform generating explanations with machine-learned models. In particular, a machine-learned model uses input-output-explanation data triples produced during the lifespan of a computer program, such as a black-box model, as training data. When the computer program is used to provide an output for the input to the computer program, the trained machine-learned model can be used to generate explanations for the inputs as they relate to the output.

According to an aspect of the present disclosure there is provided a method for generating explanations with machine-learned models. The method comprises accessing, by a computing device, a plurality of datasets, each dataset comprising an input of a first plurality of inputs to a computer program, a first output of a plurality of outputs of the computer program, and a value identifying an importance of the input to the first output and produced by an explanation service, the computer program comprising a set of operations evaluated with the first plurality of inputs and producing the plurality of outputs during execution of the computer program, and the explanation service producing values for the first plurality of inputs based on the first plurality of inputs and the plurality of outputs. The method further comprises training, by the computing device, a machine-learned model to predict values based on the plurality of datasets. The method further comprises executing, by the computing device, the computer program with a second plurality of inputs to produce a second output. The method further comprises inserting, by the computing device, the second plurality of inputs and the second output into the machine-learned model, wherein the machine-learned model produces values for the second plurality of inputs based on the second plurality of inputs and the second output.

Optionally, the method may further comprise prior to accessing the plurality of datasets, executing the computer program with the first plurality of inputs to produce the plurality of outputs; determining, based on an execution of the explanation service with the first plurality of inputs and the plurality of outputs, a value for each input of the first plurality of inputs; and storing, in a storage device, the first plurality of inputs, the plurality of outputs, and each value for each input of the first plurality of inputs.

Accessing the plurality of datasets may compriseobtaining the first plurality of inputs, the plurality of outputs, and each value for each input of the first plurality of inputs from the storage device, wherein each dataset of the plurality of datasets may comprise an input of the first plurality of inputs, an output of the plurality of outputs, and a value identifying an importance of the input to the output.

Optionally, the method further may comprise prior to training the machine-learned model to predict the values based on the plurality of datasets, determining that the plurality of datasets comprises a predetermined amount of datasets.

Training the machine-learned model to predict the values based on the plurality of datasets may comprise generating a combined input comprising the first plurality of inputs and the plurality of outputs, wherein the first plurality of inputs may comprise a first plurality of vectors and the plurality of outputs comprises a second plurality of vectors; inserting the combined input into the machine-learned model; and predicting the values as an output of the machine-learned model, wherein the output of the machine-learned model may comprise a third plurality of vectors.

Training the machine-learned model to predict the values based on the plurality of datasets may comprise: generating a first subset of datasets and a second subset of datasets from the plurality of datasets; training the machine-learned model on the first subset of datasets; inserting the second subset of datasets into the machine-learned model; predicting values based on the second subset of the plurality of datasets as an output of the machine-learned mode; performing a comparison of the values based on the second subset of the plurality of datasets and the values produced by the explanation service; and determining, based on the comparison, that the machine-learned model is trained to predict the values based on the plurality of datasets.

Optionally, the method may further comprise: storing, in a storage device, the second plurality of inputs, the second output, and each value for each input of the second plurality of inputs.

Optionally, the method may further comprise: obtaining the second plurality of inputs, the second output, and each value for each input of the second plurality of inputs from the storage device; and generating a report based on the second plurality of inputs, the second output, and each value for each input of the second plurality of inputs.

Optionally, the method may further comprise: inserting the second output and a subset of the second plurality of inputs into the explanation service to produce a subset of values for the subset of the second plurality of inputs based on the subset of the second plurality of inputs and the second output.

Optionally, the method may further comprise: performing a comparison of the values for the second plurality of inputs to the subset of values for the subset of the second plurality of inputs; and determining, based on the comparison, that the machine-learned model is accurately predicting the values for the second plurality of inputs based on the second plurality of inputs and the second output.

The computer program may comprise a machine-learned model.

The explanation service may comprise a saliency algorithm and the values comprise saliency values that identify an importance of an input to the computer program to an output of the computer program.

According to a further aspect of the present disclosure there is provided a computing device for generating explanations with machine-learned models. The computing device comprises a memory and a processor device coupled to the memory. The processor device is configured to access a plurality of datasets, each dataset comprising an input of a first plurality of inputs to a computer program, a first output of a plurality of outputs of the computer program, and a value identifying an importance of the input to the first output and produced by an explanation service, the computer program comprising a set of operations evaluated with the first plurality of inputs and producing the plurality of outputs during execution of the computer program, and the explanation service producing values for the first plurality of inputs based on the first plurality of inputs and the plurality of outputs. The processor device is further configured to train a machine-learned model to predict values based on the plurality of datasets. The processor device is further configured to execute the computer program with a second plurality of inputs to produce a second output. The processor device is further configured to insert the second plurality of inputs and the second output into the machine-learned model, wherein the machine-learned model produces values for the second plurality of inputs based on the second plurality of inputs and the second output.

Optionally, the processor device may further be configured to: prior to accessing the plurality of datasets, execute the computer program with the first plurality of inputs to produce the plurality of outputs; determine, based on an execution of the explanation service with the first plurality of inputs and the plurality of outputs, a value for each input of the first plurality of inputs; and store, in a storage device, the first plurality of inputs, the plurality of outputs, and each value for each input of the first plurality of inputs.

To access the plurality of datasets, the processor device may obtain the first plurality of inputs, the plurality of outputs, and each value for each input of the first plurality of inputs from the storage device, wherein each dataset of the plurality of datasets may comprise an input of the first plurality of inputs, an output of the plurality of outputs, and a value identifying an importance of the input to the output.

Optionally, the processor device may further be configured to: prior to training the machine-learned model to predict the values based on the plurality of datasets, determine that the plurality of datasets comprises a predetermined amount of datasets.

To train the machine-learned model to predict the values based on the plurality of datasets, the processor device may further be configured to: generate a combined input comprising the first plurality of inputs and the plurality of outputs, wherein the first plurality of inputs comprises a first plurality of vectors and the plurality of outputs comprises a second plurality of vectors; insert the combined input into the machine-learned model; and predict the values as an output of the machine-learned model, wherein the output of the machine-learned model may comprise a third plurality of vectors.

To train the machine-learned model to predict the values based on the plurality of datasets, the processor device may further be configured to: generate a first subset of datasets and a second subset of datasets from the plurality of datasets; train the machine-learned model on the first subset of datasets; insert the second subset of datasets into the machine-learned model; predict values based on the second subset of the plurality of datasets as an output of the machine-learned mode; perform a comparison of the values based on the second subset of the plurality of datasets and the values produced by the explanation service; and determine, based on the comparison, that the machine-learned model is trained to predict the values based on the plurality of datasets.

Optionally, the processor device may further be configured to: store, in a storage device, the second plurality of inputs, the second output, and each value for each input of the second plurality of inputs.

Optionally, the processor device may further be configured to: obtain the second plurality of inputs, the second output, and each value for each input of the second plurality of inputs from the storage device; and generate a report based on the second plurality of inputs, the second output, and each value for each input of the second plurality of inputs.

The processor device may further be configured to: insert the second output and a subset of the second plurality of inputs into the explanation service to produce a subset of values for the subset of the second plurality of inputs based on the subset of the second plurality of inputs and the second output;

Tthe processor device may further be configured to: perform a comparison of the values for the second plurality of inputs to the subset of values for the subset of the second plurality of inputs; and determine, based on the comparison, that the machine-learned model is accurately predicting the values for the second plurality of inputs based on the second plurality of inputs and the second output.

Tthe computer program may be a machine-learned model.

Optionally, wherein the explanation service may comprise a saliency algorithm and the values comprise saliency values that identify an importance of an input to the computer program to an output of the computer program.

According to yet another aspect of the present disclosure there is provided a non-transitory computer-readable storage medium for generating explanations with machine-learned models. The non-transitory computer-readable storage medium comprises computer-executable instructions that, when executed, cause one or more processor devices to access a plurality of datasets, each dataset comprising an input of a first plurality of inputs to a computer program, a first output of a plurality of outputs of the computer program, and a value identifying an importance of the input to the first output and produced by an explanation service, the computer program comprising a set of operations evaluated with the first plurality of inputs and producing the plurality of outputs during execution of the computer program, and the explanation service producing values for the first plurality of inputs based on the first plurality of inputs and the plurality of outputs. The instructions further configured to cause the processor device to train a machine-learned model to predict values based on the plurality of datasets. The instructions further configured to cause the processor device to execute the computer program with a second plurality of inputs to produce a second output. The instructions further configured to cause the processor device to insert the second plurality of inputs and the second output into the machine-learned model, wherein the machine-learned model produces values for the second plurality of inputs based on the second plurality of inputs and the second output.

Optionally, the instructions may further cause the processor device to: prior to accessing the plurality of datasets, execute the computer program with the first plurality of inputs to produce the plurality of outputs; determine, based on an execution of the explanation service with the first plurality of inputs and the plurality of outputs, a value for each input of the first plurality of inputs; and store, in a storage device, the first plurality of inputs, the plurality of outputs, and each value for each input of the first plurality of inputs.

To access the plurality of datasets, the instructions may cause the processor device to obtain the first plurality of inputs, the plurality of outputs, and each value for each input of the first plurality of inputs from the storage device, wherein each dataset of the plurality of datasets may comprise an input of the first plurality of inputs, an output of the plurality of outputs, and a value identifying an importance of the input to the output.

Optionally, the instructions may further cause the processor device to: prior to training the machine-learned model to predict the values based on the plurality of datasets, determine that the plurality of datasets comprises a predetermined amount of datasets.

To train the machine-learned model to predict the values based on the plurality of datasets, the instructions may further cause the processor device to: generate a combined input comprising the first plurality of inputs and the plurality of outputs, wherein the first plurality of inputs comprises a first plurality of vectors and the plurality of outputs comprises a second plurality of vectors; insert the combined input into the machine-learned model; and predict the values as an output of the machine-learned model, wherein the output of the machine-learned model may comprise a third plurality of vectors.

To train the machine-learned model to predict the values based on the plurality of datasets, the instructions may further cause the processor device to: generate a first subset of datasets and a second subset of datasets from the plurality of datasets; train the machine-learned model on the first subset of datasets; insert the second subset of datasets into the machine-learned model; predict values based on the second subset of the plurality of datasets as an output of the machine-learned mode; perform a comparison of the values based on the second subset of the plurality of datasets and the values produced by the explanation service; and determine, based on the comparison, that the machine-learned model is trained to predict the values based on the plurality of datasets.

Optionally, the instructions may further cause the processor device to: store, in a storage device, the second plurality of inputs, the second output, and each value for each input of the second plurality of inputs.

Optionally, the instructions may further cause the processor device to: obtain the second plurality of inputs, the second output, and each value for each input of the second plurality of inputs from the storage device; and generate a report based on the second plurality of inputs, the second output, and each value for each input of the second plurality of inputs.

Optionally, the instructions may further cause the processor device to: insert the second output and a subset of the second plurality of inputs into the explanation service to produce a subset of values for the subset of the second plurality of inputs based on the subset of the second plurality of inputs and the second output;

Optionally, the instructions may further cause the processor device to: perform a comparison of the values for the second plurality of inputs to the subset of values for the subset of the second plurality of inputs; and determine, based on the comparison, that the machine-learned model is accurately predicting the values for the second plurality of inputs based on the second plurality of inputs and the second output.

The computer program may be a machine-learned model.

The explanation service may comprise a saliency algorithm and the values comprise saliency values that identify an importance of an input to the computer program to an output of the computer program.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of a computing device in which examples of generating explanations with machine-learned models may be practiced;
Figure 2 is a flowchart illustrating operations performed by the computing device of Figure 1 for generating explanations with machine-learned models, according to one example;
Figure 3 is a block diagram of the computing device of Figure 1 for generating explanations with machine-learned models, according to one example;
Figure 4 is a block diagram of the computing device of Figure 1 for generating explanations with machine-learned models, according to one example;
Figure 5 is a block diagram of the computing device of Figure 1 for generating explanations with machine-learned models, according to one example;
Figure 6 is a block diagram of the computing device of Figure 1 for generating explanations with machine-learned models, according to one example; and
Figure 7 is a block diagram of a computing device suitable for implementing examples, according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the elements unless otherwise explicitly specified. The word "or" as used herein and in the claims is inclusive unless contextually impossible. As an example, the recitation of A or B means A, or B, or both A and B. The word "data" may be used herein in the singular or plural depending on the context.

Explainable artificial intelligence (XAI) seeks to investigate complex systems and models, such as black-box models (e.g., neural networks, random forests) with innerworkings that are inaccessible or too complex to be interpreted. Explanations of such complex systems are necessary in order to comply with business ethics and various regulations that entitle users of automated decisions the right to an explanation of the decision-making process that led to the automated decision. For example, a computer program may be a complex set of operations that determines whether a customer qualifies for a loan by receiving information about the customer, performing the operations, and producing a result of whether the customer qualifies for the loan. Some such computer programs may be white-box models, in that all decisions the computer program makes can be easily understood by an understanding of all component operations, however, systems with a large number of operations or with complex operations (e.g., black-box models) can be too difficult to be easily or quickly understood. As computer programs become more complex, it is desirable to apply XAI techniques to the program in order to comply with business ethics and various regulations, and to be able to quickly understand the behavior of the system without detailed first-hand knowledge of the operations. XAI seeks to investigate complex systems and models, however some XAI techniques can be computationally expensive.

An example XAI technique is a saliency method, which produces a quantitative breakdown of how components within an input to a computer program (e.g., a black-box model) affect the output of the computer program. For example, a saliency method can produce an explanation for the impact of each input into a black-box model that determines whether a customer will be accepted or denied for a credit card application, such as explanations in the form of saliency values that explain that the customer's credit score of 700 increased the likelihood of acceptance by 15% but the customer's age of 24 decreased the likelihood of acceptance by 5%. However, saliency methods require a significant amount of sampling of the original computer program that is to be explained, as the methods create a large range of synthetic data points, which are modifications of the original input to the computer program, to generate the explanations. For instance, the synthetic data points can be passed through the black-box model and the effects of the output of the black-box model can be observed, then the saliency method can distill this information into an explanation of the behavior of the black-box model, which is computationally expensive. For example, explaining one output can cost 200,000 times as much as the single output to be explained.

A computer program deployed within a platform can receive thousands of inputs during its lifespan and produce a correspondingly high number of outputs and explanations, which can be stored over time as a dataset of input-output-explanation data triples. The examples disclosed herein bypass expensive saliency methods by creating a saliency predictor model, which is a machine-learned model that uses the input-output-explanation data triples produced during the lifespan of the computer program as training data. The trained saliency predictor model can then be used by the platform to produce explanations, such as saliency values, for the inputs to the computer program, resulting in a reduction in time costs to produce the explanations.

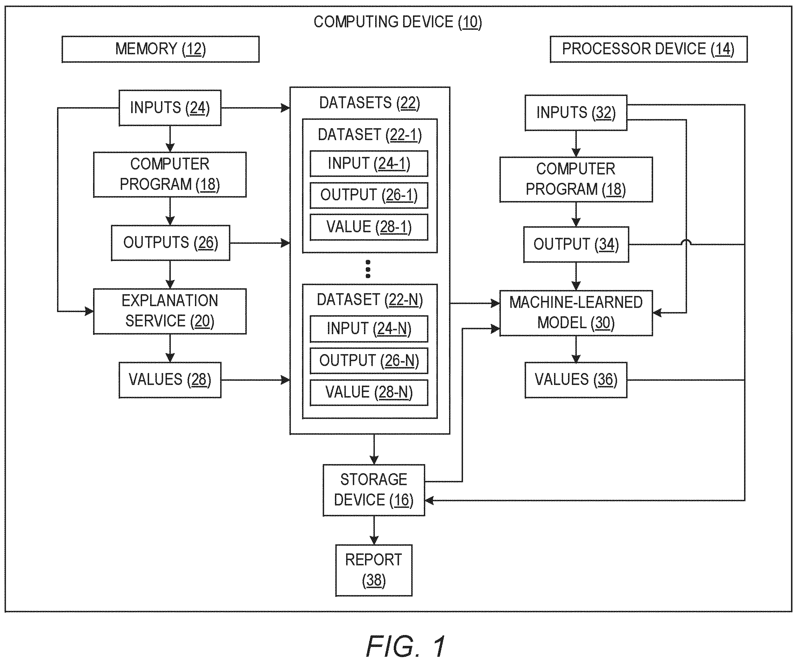

Figure 1 is a block diagram of a computing device 10 that comprises a system memory 12, a processor device 14, and a storage device 16 in which examples of generating explanations with machine-learned models may be practiced. It is to be understood that the computing device 10 in some examples may comprise constituent elements in addition to those illustrated in Figure 1.

The computing device 10 may comprise a computer program 18 and an explanation service 20. The computing device 10, the computer program 18, and the explanation service 20 may be components of a platform or server that receives inputs and produces outputs and explanations for the inputs and output over time. The computer program 18 can comprise a set of operations that are evaluated with an input and produce an output when the computer program 18 is executed. For instance, the computer program 18 may be a black-box model, a white-box model, a machine-learned model, a rules engine, or another computer function that takes an input, performs operations by performing complex actions or evaluating rules, and produces an output as a result. The explanation service 20 can produce values that identify the importance or contribution of an input to the computer program 18 to the output of the computer program 18. Each input that is processed by the computer program 18 and entered into the explanation service 20 can produce a corresponding value that indicates the importance of the respective input to the respective output of the computer program 18. The explanation service 20 may employ an XAI technique or algorithm such as a saliency algorithm that produces saliency values that identify the importance of an input to the computer program 18 to an output of the computer program 18. For instance, the explanation service 20 may comprise the SHAP (Shapley additive explanations) or LIME (local interpretable model-agnostic explanations) saliency algorithms, as non-limiting examples, which provide quantitative saliency values that explain the output of the computer program 18, such as percentages or numbers that reflect the contribution of an input to the output.

For example, the computer program 18 may be a black-box model that computes the likelihood of a customer receiving a loan from a bank. The computer program 18 may receive inputs, such as the customer's credit score, age, income, and gender, and produce an output that states whether the customer is accepted or denied the loan based on the inputs. The explanation service 20 can then use the inputs and the output to determine the importance or contribution of each of the inputs to the output of the computer program 18 in the form of a list of values for each input, such as values of 50% impact for the customer's credit score, 10% impact for the customer's age, and 0% impact for the customer's gender. As a result, a user can ensure that the computer program 18 is not accepting or denying loan applications based on a protected characteristic and is producing results that comply with regulations.

The computing device 10 may access a plurality of datasets 22-1 - 22-N (collectively, datasets 22). Each dataset of the datasets 22 can be a data triple that comprises an input of a plurality of inputs 24 to the computer program 18, an output of a plurality of outputs 26 of the computer program 18, and a value of a plurality of values 28 (e.g., SHAP or LIME saliency values) produced by the explanation service 20 that explain the inputs 24 as they relate to the outputs 26. For instance, dataset 22-1 can be a data triple that comprises input 24-1 to the computer program 18, output 26-1 of the computer program 18 for the input 24-1, and value 28-1 produced by the explanation service 20 and that corresponds to the input 24-1 (e.g., the importance of the input 24-1 to the output 26-1). For example, the dataset 22-1 may be a data triple in the form of (input, output, value), such as ("credit score 700", "accepted", "0.50") indicating that the customer's credit score of 700 had a 50% impact on the customer being accepted for a bank loan when the computer program 18 determines whether a customer will be accepted or denied a bank loan.

The datasets 22 can be collected over time as the computer program 18 is executed to produce the outputs 26 based on the inputs 24 to the computer program 18 and the explanation service 20 is executed to produce the values 28 corresponding to the inputs 24. For instance, the computer program 18 can be a black-box model that determines whether a customer will be accepted for a loan, and over time the computer program 18 can be executed with multiple inputs for multiple customers, resulting in the outputs 26 of whether each customer was accepted for a loan based on the inputs for that customer, and the explanation service 20 can be executed with the inputs 24 and the outputs 26 to produce the values 28. Prior to accessing the datasets 22, the computer program 18 can be executed with the inputs 24 to produce the outputs 26. For instance, thousands of inputs 24 can be entered into the computer program 18, such as for different customers applying for loans over time, which may produce many outputs 26, such as an acceptance or denial of a loan for each customer, as the computer program 18 may be executed many times. The explanation service 20 may then be executed with the inputs 24 and the outputs 26 to produce the values 28 for each of the inputs 24 that identify the importance of the respective input to the corresponding output that was produced by the computer program 18. As the computer program 18 and the explanation service 20 are executed, the inputs 24, the outputs 26, and the values 28 may be stored in the storage device 16 or another storage device remote to the computing device 10 as the datasets 22, where each dataset is a data triple with an input, the output that corresponds to that input, and the value that corresponds to that input and output. In implementations where the datasets 22 are stored in the storage device 16, the computing device 10 may access the datasets 22 by obtaining the datasets 22 from the storage device 16. By obtaining the datasets 22 from the storage device 16, the computing device 10 can obtain the inputs 24, the outputs 26, and the values 28 corresponding to the inputs 24.

The computing device 10 can train a machine-learned model 30 (e.g., a neural network or multi-output regressor, as non-limiting examples) to predict values that indicate the importance of the inputs to the computer program 18 to the outputs of the computer program 18 based on the datasets 22. At periodic times, such as when enough datasets 22 have been collected and stored, the machine-learned model 30 can be trained on the datasets 22 by receiving input-output pairs of each of the inputs 24 and the outputs 26 that correspond to each other and then predicting the values 28. For instance, the machine-learned model 30 can be trained when a predetermined amount of the datasets 22 have been produced by the computer program 18 and the explanation service 20, such as 25,000 datasets, to be used for training the machine-learned model 30. When the machine-learned model 30 is trained on the datasets 22 to be able to predict values given the inputs and outputs from the computer program 18 with sufficient accuracy, the machine-learned model 30 may replace the explanation service 20 so that the machine-learned model 30 can be used to provide the explanations in the form of values that indicate the importance of an input to an output. The machine-learned model 30 may be sufficiently trained on the datasets 22, for example, when the machine-learned model 30 meets a user-provided (e.g., the service provider of the computer program 18) standard, such as 99% accuracy in predicting the values 28 when the inputs 24 and the outputs 26 are input into the machine-learned model 30.

The computer program 18 can be executed with a second set of inputs 32 to produce an output 34. The inputs 32 and the output 34 can then be inserted into the machine-learned model 30 to produce values 36 that identify the importance of each of the inputs 32 to the computer program 18 to the output 34 of the computer program 18. As a result of using the machine-learned model 30 instead of the explanation service 20 to produce values that identify the importance of the inputs to the computer program 18, the compute time per explanation (i.e., value) can be reduced, in some examples on the order of 200,000 times, since the cost of running a machine-learned model (e.g., the machine-learned model 30) is less than the cost of explaining a machine-learned model (e.g., the computer program 18). The computer program 18 can continue to be executed with inputs to produce outputs, and the inputs and the outputs can be inserted into the machine-learned model 30 to produce values that identify the importance of each of the inputs to the corresponding one or more outputs.

In some implementations, the inputs 32, the output 34, and the values 36 may be stored in the storage device 16 or another storage device remote to the computing device 10 as datasets, such as data triples, where each dataset is a data triple with an input, the output that corresponds to that input, and the value that corresponds to that input and output. In implementations where the inputs 32, the outputs 34, and the values 36 are stored in the storage device 16, the computing device 10 may obtain the inputs 32, the output 34, and the values 36 for each of the inputs 32 from the storage device 16 and generate a report 38 based on the inputs 32, the output 34, and the values 36. For example, the inputs 32 may be a customer's information that is used by the computer program 18 to generate a credit report, the output 34 may be the customer's credit score, the machine-learned model 30 may use the inputs 32 and the output 34 to determine the values 36 that indicate the importance or contribution of each item of the customer's information to the customer's credit report, and the report 38 generated may be a credit report for the customer that lists the customer's information and the percentage of how much each piece of information contributed to the customer's credit score. In some implementations, the values 36 may be used by the computing device 10 to translate the values 36 into meaningful terms for a user to understand, such as on a display to a user, or to flag potentially problematic predictions, such as when a value indicates that an input for a protected attribute influenced the output more than expected.

In examples where software instructions program the processor device 14 to carry out functionality discussed herein, functionality implemented by the computing device 10 may be attributed herein to the processor device 14. It is to be further understood that the functionality implemented by the computing device 10 may be implemented in any number of components, and the examples discussed herein are not limited to any particular number of components.

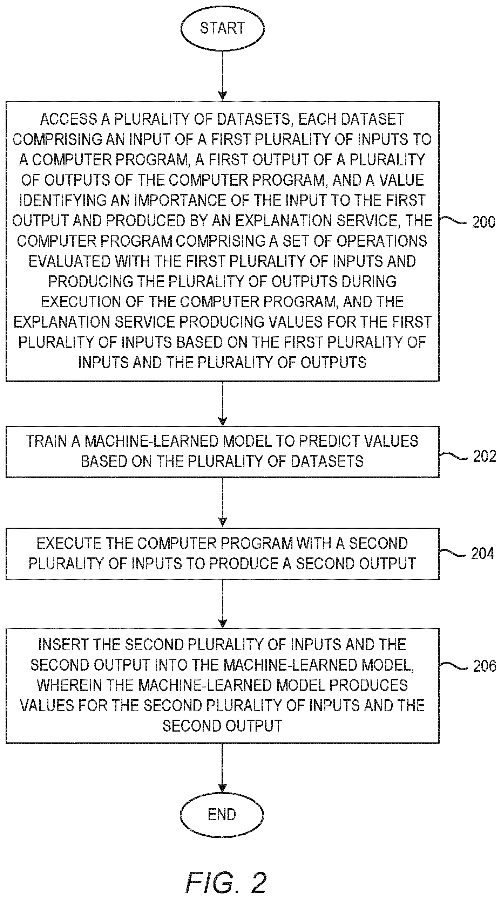

Figure 2 is a flowchart illustrating operations performed by the computing device of Figure 1 for generating explanations with machine-learned models, according to one example. Elements of Figure 1 are referenced in describing Figure 2 for the sake of clarity. In Figure 2, operations begin with a processor device of a computing device, such as the processor device 14 of the computing device 10 of Figure 1, the processor device 14 is to access a plurality of datasets, each dataset comprising an input of a first plurality of inputs to a computer program, a first output of a plurality of outputs of the computer program, and a value identifying an importance of the input to the first output and produced by an explanation service, the computer program comprising a set of operations evaluated with the first plurality of inputs and producing the plurality of outputs during execution of the computer program, and the explanation service producing values for the first plurality of inputs based on the first plurality of inputs and the plurality of outputs (block 200). The processor device 14 is further to train a machine-learned model to predict values based on the plurality of datasets (block 202). The processor device 14 is further to execute the computer program with a second plurality of inputs to produce a second output (block 204). The processor device 14 is further to insert the second plurality of inputs and the second output into the machine-learned model, wherein the machine-learned model produces values for the second plurality of inputs based on the second plurality of inputs and the second output (block 206).

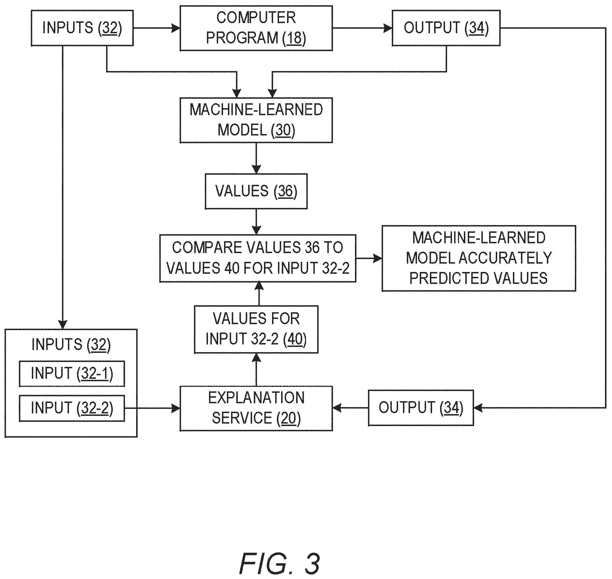

Figure 3 is a block diagram of the computing device of Figure 1 for generating explanations with machine-learned models, according to one example. Elements of Figure 1 are referenced in describing Figure 3 for the sake of clarity. In the example of Figure 3, the computing device 10 may perform smart load balancing that passes some inputs to the explanation service 20 in order to continually create a ground-truth dataset to continually train the machine-learned model 30 and ensure that the machine-learned model 30 is accurately predicting values. The output 34 and a subset of the inputs 32-2 can be inserted as inputs into the explanation service 20 to produce a subset of values 40 that identify the importance of each input of the subset of the inputs 32-2 to the output 34. For instance, one out of every ten of the values may be generated by the explanation service 20 to ensure that the computer program 18 and the machine-learned model 30 are aligned.

In some examples, the values 36 that identify the importance of each of the inputs 32 to the output 34 of the computer program 18 can be compared to the subset of values 40 that identify the importance of each input of the subset of the inputs 32-2 to the computer program 18 to the output 34 of the computer program 18 to ensure that the computer program 18 and the machine-learned model 30 are aligned. Based on the comparison, the computing device 10 can determine that the machine-learned model 30 is accurately predicting the values 36 for the inputs 32. The machine-learned model 30 may be accurately predicting the values 36 for the inputs 32 when the subset of values 40 produced by the explanation service 20 with the subset of the inputs 32-2 are comprised in the values 36 produced by the machine-learned model 30 for the same corresponding inputs and outputs.

The subset of values 40 generated by the explanation service 20 can also be used to further train the machine-learned model 30. For instance, the subset of values 40 can be stored in the storage device 16 as data triples each containing an input of the subset of inputs 32-2 and a corresponding output and value, and the computing device 10 can obtain the data triples from the storage device 16 to insert into the machine-learned model 30 for training.

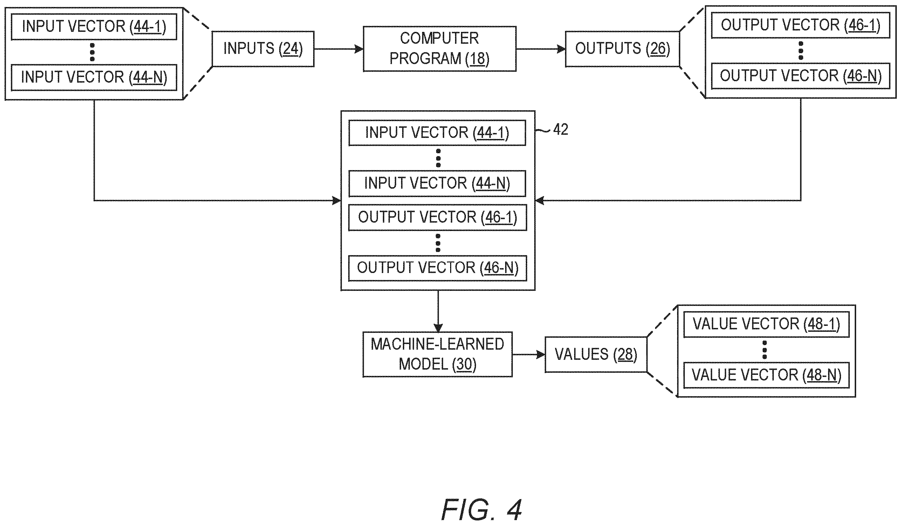

Figure 4 is a block diagram of the computing device of Figure 1 for generating explanations with machine-learned models, according to one example. Elements of Figure 1 are referenced in describing Figure 4 for the sake of clarity. In the example of Figure 4, the computing device 10 may train the machine-learned model 30 to predict values by generating a combined input 42 that comprises the inputs 24 and the outputs 26 and inserting the combined input 42 into the machine-learned model 30 for training. The inputs 24 may be a plurality of input vectors 44-1 - 44-N (collectively, input vectors 44), each of the input vectors 44 representing an input of the inputs 24. The size of the input vectors 44 can be the number of features or inputs of the inputs 24 to the computer program 18 (e.g., a machine-learned model). The outputs 26 may be a plurality of output vectors 46-1 - 46-N (collectively, output vectors 46), each of the output vectors 46 representing an output of the outputs 26. The size of the output vectors 46 can be the number of fields within the outputs 26 of the computer program 18. The combined input 42 can comprise a combination of the input vectors 44 and the output vectors 46 with the size of the combined input 42 being the size of the input vectors plus the size of the output vectors 46, which can then be inserted into the machine-learned model 30. The machine-learned model 30 can predict the values 28 as an output and the values 28 may be a plurality of vectors 48-1 - 48-N (collectively, value vectors 48). The output of the machine-learned model 30, the value vectors 48, may be the same size as the input vectors 44 and the value vectors 48 may comprise the same number of vectors as the input vectors 44 since each value, represented by a value vector, identifies an importance of an input, represented by an input vector.

For example, the computer program 18 may be a black-box model that computes the likelihood of a customer receiving a loan from a bank. The input vectors 44 may be the features or inputs 24 into the computer program 18, such as customer name, age, credit score, income, and debt, and the output vectors 46 may be fields of the outputs 26, such as the acceptance of the loan for the customer and the likelihood of default on the loan. In this example, the five input vectors 44 can be combined with the two output vectors 46 to create the combined input 42 of vectors of size seven since there are five inputs and two outputs. The combined input 42 can then be inserted into the machine-learned model 30 to predict the values 28 that identify the importance of each of the inputs 24 which are represented in the input vectors 44 and the combined input 42. The values 28 that the machine-learned model 30 predicts can be in the form of five vectors since there were five inputs into the computer program 18 that the values 28 were predicted for by the machine-learned model 30.

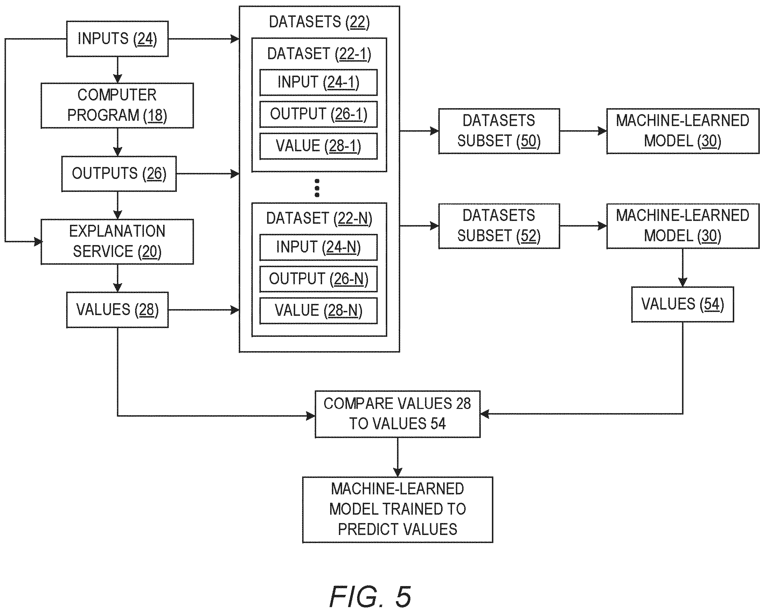

Figure 5 is a block diagram of the computing device of Figure 1 for generating explanations with machine-learned models, according to one example. Elements of Figure 1 are referenced in describing Figure 5 for the sake of clarity. In the example of Figure 5, the computing device 10 may train the machine-learned model 30 to predict values by splitting the datasets 22 into two or more groups of datasets and training the machine-learned model 30 on one group of datasets and then evaluating the accuracy of the machine-learned model 30 in generating the values of the second group of datasets. The computing device 10 can generate a first subset 50 of the datasets 22 and a second subset 52 of the datasets 22 and train the machine-learned model 30 on the first subset 50 of the datasets 22. The first subset 50 of the datasets 22, which is used to train the machine-learned model 30, may be larger than the second subset 52 of the datasets 22 which are used for predictions, such as 40,000 data triples in the first subset 50 and 10,000 data triples in the second subset 52.

When the machine-learned model 30 is trained, the second subset 52 of the datasets 22 can be inserted into the machine-learned model 30. The inputs and the outputs that comprise the second subset 52 of datasets 22 can be inserted into the machine-learned model 30 and the machine-learned model 30 can use the inputs and the outputs that comprise the second subset 52 of datasets 22 to predict values 54 for the inputs of the second subset 52 of datasets 22. The values 54 can be compared to the values in the second subset 52 of datasets 22, which comprise a subset of the values 28 produced by the explanation service 20, to determine whether the machine-learned model 30 is trained to predict values based on the datasets 22. The comparison can indicate whether the machine-learned model 30 is trained because the explanation service 20, which is to be replaced by the machine-learned model 30, has generated the values 28 for all of the inputs 24 and the outputs 26 which comprise the datasets 22, so the values 28 that correspond to the data in the second subset 52 of the datasets 22 are expected to be output by the machine-learned model 30 as the values 54.

For example, if the comparison indicates that the machine-learned model 30 correctly predicted 95% of the values in the second subset 52 of datasets 22 when the inputs of the second subset 52 of datasets 22 are entered into the machine-learned model 30, then the machine-learned model 30 may be considered to be trained and the machine-learned model 30 can replace the explanation service 20 for determining values from the input and the output of the computer program 18. In some implementations, a user or service provider of the computer program 18 and/or the explanation service 20 can determine the level of accuracy desired for the machine-learned model 30, and the explanation service 20 can be replaced with the machine-learned model 30 when the set level of accuracy is met.

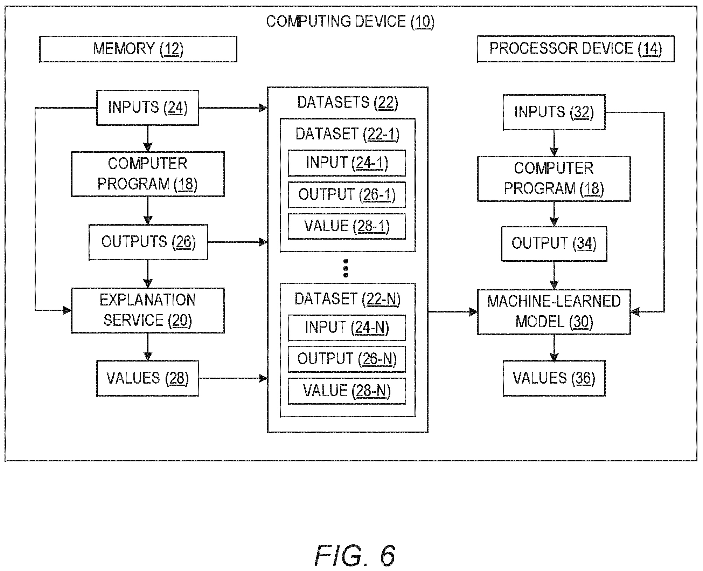

Figure 6 is a simpler block diagram of the computing device of Figure 1 for generating explanations with machine-learned models, according to one example. Elements of Figure 1 are referenced in describing Figure 6 for the sake of clarity. In the example of Figure 6, the computing device 10 comprises a system memory 12 and a processor device 14 coupled to the system memory 12. The processor device 14 is to access a plurality of datasets 22, each dataset comprising an input of a first plurality of inputs 24 to a computer program 18, a first output of a plurality of outputs 26 of the computer program 18, and a value identifying an importance of the input to the first output and produced by an explanation service 20, the computer program 18 comprising a set of operations evaluated with the first plurality of inputs 24 and producing the plurality of outputs 26 during execution of the computer program 18, and the explanation service 20 producing values 28 for the first plurality of inputs 24 based on the first plurality of inputs 24 and the plurality of outputs 26. The processor device 14 is further to train a machine-learned model 30 to predict values based on the plurality of datasets 22. The processor device 14 is further to execute the computer program 18 with a second plurality of inputs 32 to produce a second output 34. The processor device 14 is further to insert the second plurality of inputs 32 and the second output 34 into the machine-learned model 30, wherein the machine-learned model 30 produces values 36 for the second plurality of inputs 32 based on the second plurality of inputs 32 and the second output 34.

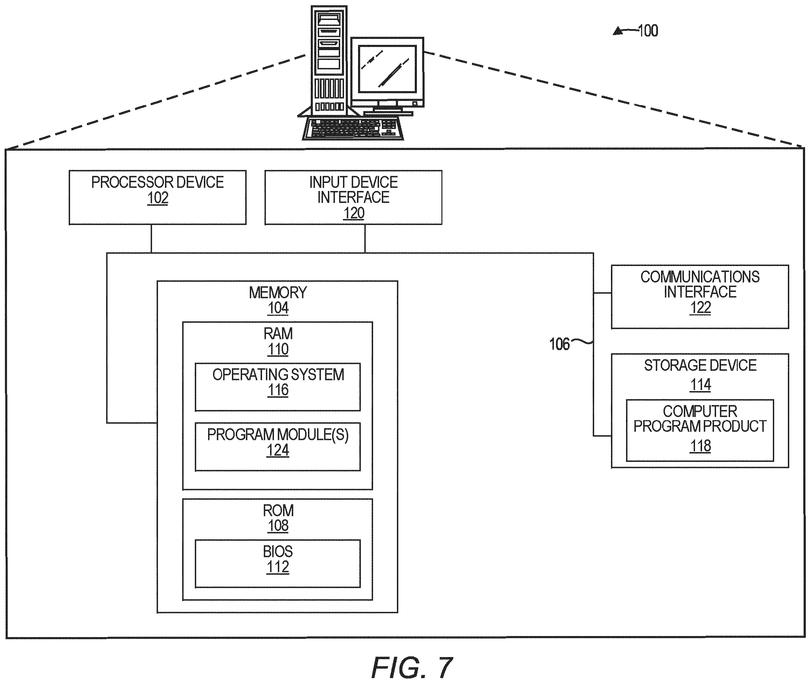

Figure 7 is a block diagram of a computing device 100, such as the computing device 10 of Figure 1, suitable for implementing examples according to one example. The computing device 100 may comprise any computing or electronic device capable of including firmware, hardware, and/or executing software instructions to implement the functionality described herein. The computing device 100 comprises a processor device 102, such as the processor device 14, a system memory 104, such as the system memory 12, and a system bus 106. The system bus 106 provides an interface for system components including, but not limited to, the system memory 104 and the processor device 102. The processor device 102 can be any commercially available or proprietary processor.

The system bus 106 may be any of several types of bus structures that may further interconnect to a memory bus (with or without a memory controller), a peripheral bus, and/or a local bus using any of a variety of commercially available bus architectures. The system memory 104 may comprise non-volatile memory 108 (e.g., read-only memory (ROM), erasable programmable read-only memory (EPROM), electrically erasable programmable read-only memory (EEPROM), etc.), and volatile memory 110 (e.g., random-access memory (RAM)). A basic input/output system (BIOS) 112 may be stored in the non-volatile memory 108 and can comprise the basic routines that help to transfer information between elements within the computing device 100. The volatile memory 110 may also comprise a high-speed RAM, such as static RAM, for caching data.

The computing device 100 may further comprise or be coupled to a non-transitory computer-readable storage medium such as a storage device 114, such as the storage device 16, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide non-volatile storage of data, data structures, computer-executable instructions, and the like.

A number of modules can be stored in the storage device 114 and in the volatile memory 110, including an operating system 116 and one or more program modules 124, which may implement the functionality described herein in whole or in part. All or a portion of the examples may be implemented as a computer program product 118 stored on a transitory or non-transitory computer-usable or computer-readable storage medium, such as the storage device 114, which comprises complex programming instructions, such as complex computer-readable program code, to cause the processor device 102 to carry out the steps described herein. Thus, the computer-readable program code can comprise software instructions for implementing the functionality of the examples described herein when executed on the processor device 102. The processor device 102, in conjunction with the program modules 124 in the volatile memory 110, may serve as a controller, or control system, for the computing device 100 that is to implement the functionality described herein.

An operator, such as a user, may also be able to enter one or more configuration commands through a keyboard (not illustrated), a pointing device such as a mouse (not illustrated), or a touch-sensitive surface such as a display device (not illustrated). Such input devices may be connected to the processor device 102 through an input device interface 120 that is coupled to the system bus 106 but can be connected by other interfaces such as a parallel port, an Institute of Electrical and Electronic Engineers (IEEE) 1394 serial port, a Universal Serial Bus (USB) port, an IR interface, and the like. The computing device 100 may also comprise a communications interface 122 suitable for communicating with the network as appropriate or desired. The computing device 100 may also comprise a video port (not illustrated) configured to interface with the display device (not illustrated), to provide information to the user.

Individuals will recognize improvements and modifications to the preferred examples of the disclosure. All such improvements and modifications are considered within the scope of the concepts disclosed herein and the claims that follow.

## Claims

1. A method, comprising:
accessing, by a computing device, a plurality of datasets, each dataset comprising an input of a first plurality of inputs to a computer program, a first output of a plurality of outputs of the computer program, and a value identifying an importance of the input to the first output and produced by an explanation service, the computer program comprising a set of operations evaluated with the first plurality of inputs and producing the plurality of outputs during execution of the computer program, and the explanation service producing values for the first plurality of inputs based on the first plurality of inputs and the plurality of outputs;
training, by the computing device, a machine-learned model to predict values based on the plurality of datasets;
executing, by the computing device, the computer program with a second plurality of inputs to produce a second output; and
inserting, by the computing device, the second plurality of inputs and the second output into the machine-learned model, wherein the machine-learned model produces values for the second plurality of inputs based on the second plurality of inputs and the second output.

2. The method of claim 1, further comprising:
prior to accessing the plurality of datasets, executing the computer program with the first plurality of inputs to produce the plurality of outputs;
determining, based on an execution of the explanation service with the first plurality of inputs and the plurality of outputs, a value for each input of the first plurality of inputs; and
storing, in a storage device, the first plurality of inputs, the plurality of outputs, and each value for each input of the first plurality of inputs.

3. The method of claim 2, wherein accessing the plurality of datasets comprises obtaining the first plurality of inputs, the plurality of outputs, and each value for each input of the first plurality of inputs from the storage device, wherein each dataset of the plurality of datasets comprises an input of the first plurality of inputs, an output of the plurality of outputs, and a value identifying an importance of the input to the output.

4. The method of claim 1, further comprising:
prior to training the machine-learned model to predict the values based on the plurality of datasets, determining that the plurality of datasets comprises a predetermined amount of datasets.

5. The method of claim 1, wherein training the machine-learned model to predict the values based on the plurality of datasets comprises:
generating a combined input comprising the first plurality of inputs and the plurality of outputs, wherein the first plurality of inputs comprises a first plurality of vectors and the plurality of outputs comprises a second plurality of vectors;
inserting the combined input into the machine-learned model; and
predicting the values as an output of the machine-learned model, wherein the output of the machine-learned model comprises a third plurality of vectors.

6. The method of claim 1, wherein training the machine-learned model to predict the values based on the plurality of datasets comprises:
generating a first subset of datasets and a second subset of datasets from the plurality of datasets;
training the machine-learned model on the first subset of datasets;
inserting the second subset of datasets into the machine-learned model;
predicting values based on the second subset of the plurality of datasets as an output of the machine-learned mode;
performing a comparison of the values based on the second subset of the plurality of datasets and the values produced by the explanation service; and
determining, based on the comparison, that the machine-learned model is trained to predict the values based on the plurality of datasets.

7. The method of claim 1, further comprising:
storing, in a storage device, the second plurality of inputs, the second output, and each value for each input of the second plurality of inputs.

8. The method of claim 7, further comprising:
obtaining the second plurality of inputs, the second output, and each value for each input of the second plurality of inputs from the storage device; and
generating a report based on the second plurality of inputs, the second output, and each value for each input of the second plurality of inputs.

9. The method of claim 1, further comprising:
inserting the second output and a subset of the second plurality of inputs into the explanation service to produce a subset of values for the subset of the second plurality of inputs based on the subset of the second plurality of inputs and the second output.

10. The method of claim 9, further comprising:
performing a comparison of the values for the second plurality of inputs to the subset of values for the subset of the second plurality of inputs; and
determining, based on the comparison, that the machine-learned model is accurately predicting the values for the second plurality of inputs based on the second plurality of inputs and the second output.

11. The method of claim 1, wherein the computer program comprises a machine-learned model.

12. The method of claim 1, wherein the explanation service comprises a saliency algorithm and the values comprise saliency values that identify an importance of an input to the computer program to an output of the computer program.

13. A computing device, comprising:
a memory; and
a processor device coupled to the memory, the processor device configured to perform the method of any of claims 1-12.

14. A non-transitory computer-readable storage medium that comprises computer-executable instructions that, when executed, cause one or more processor devices to perform the method of any of claims 1-12.
